# EUROPEAN PATENT APPLICATION

(11) **EP 3 883 096 A1**
(43) Date of publication of application: **22.09.2021**
(21) Application number: 20163359.1
(22) Date of filing: 16.03.2020
(51) Int. Cl.: H02K 3/18, H02K 7/18, H02K 21/24, H02K 16/00, H02K 21/16

(54) **ELECTRICITY GENERATOR**

(71) Applicant: Lapin, Igor Mykolayovych, Kharkiv (UA); Stukalkin, Vitaliy Yuriyovych, Kharkiv (UA); Lapina, Liudmyla Viktorivna, Kharkiv (UA)
(72) Inventor: Lapin, Igor Mykolayovych, Kharkiv (UA); Stukalkin, Vitaliy Yuriyovych, Kharkiv (UA); Lapina, Liudmyla Viktorivna, Kharkiv (UA)
(74) Representative: Stolmár & Partner Patentanwälte PartG mbB

(57) **Abstract**

The electric generator contains at least one part with permanent magnets and another part with a winding, moreover, at least one of these parts is rotationally driven and the permanent magnets are located in two sets consisting of two belts of poles, so that in each of these sets permanent magnets are face in the same direction with the same pole, forming a belt of identical poles, with the same pole belts from two sets relative to each other, and each winding is wound in the form of a figure eight on cores consisting of two parts, one of which is located opposite to one strip of identical poles of permanent magnets, and the other opposite to the second strip of poles of permanent magnets of opposite value and each winding is simultaneously affected by four permanent magnet belts in two levels.

## Description

### Field of the Invention

The subject of the invention is an electric power generator intended for stationary objects, such as residential, industrial facilities, and for moving objects, for example, in transport, using mechanical energy, for example, renewable energy, or others, for example, in cars, rail, air or marine vehicles and can also be used in installations that convert the energy of the wind flow into mechanical rotation and the generation of clean electricity for consumers.

### Prior Art

A wind power installation known from patent document WO 2016/190836 A1, which comprises at least one main high-voltage generator, which consists of a rotor in the form of two disks with permanent magnets that are uniformly mounted on a circle at its periphery, opposite poles facing each other and a stator disk with coreless coils that are located between the rotor disks. In addition, the power plant has at least one low voltage generator and an electronic module for synchronizing and mixing the voltages of the two types of generators mentioned above.

An electric generator known from US Pat. No. 5,696,419, the stator of which has many elements in the shape of letter "C" made of a material with high magnetic permeability, which are distributed in a circle with the open part of "C" in the direction of the axis or outward, forming an annular gap, winding of an anchor is wound on each of these elements. In turn, the rotor has an annular shape and is made of a material with low magnetic permeability. Cylindrical permanent magnets mounted in slot "C" are mounted on the rotor. As a result of the rotation of the rotor and the movement of the magnets in the gap "C" in the stator windings, an electric current occurs.

From patent document GB 2521653 A, is known as shaftless generator that contains a stator and a rotor containing respectively the first and the second set of magnets, which are arranged such that similar poles face each other, causing continuous rotation of the rotor, which is magnetically levitated by a repulsive force between the sets of magnets. An electric wire is placed in the space between the stator and the rotor, so that a current is induced in the wire during rotation. The cable can be a straight coil or it can be wrapped around a rotor. The impeller can be in the form of a ring without a roller. The magnets can be permanent magnets and can be appropriately circumferentially arranged around the inner and outer surfaces of the stator and rotor. Stabilizing systems including restricting elements 21 may be used to prevent radial displacement of the rotor 5. An actuator may be provided to move the rotor or stator to stop or initiate rotation and levitation.

From a patent document CN 104242732 A, a magnetic generator driven by a magnetic motor is known which consists a big number of rotor disks with permanent magnets and a stator disk with permanent magnets. The two surfaces of each rotor disk are respectively equipped with four permanent magnets in the range of 90 degrees. The polarities of the permanent magnets on each surface of each rotor disk are clockwise, and the rotor disks are arranged in series.

### Summary of the Invention

The aim of the present invention is to develop a highly efficient, reliable design of an electric generator of direct or alternating current using a source of mechanical energy, for example, wind power or mechanical energy of a rotating car wheel, and powering a consumer, such as residential premises, transportation facilities, etc.

The reason that forms and maintains the potential difference causing an electric current in the circuit is called electromotive force. Moving the winding through a magnetic field leads to the emergence of an electromotive force in the winding, and an electric current. The voltage and current that occur in the winding depend, inter alia, on the speed of movement of the winding through the magnetic field, or the source of the magnetic field through the winding, the strength of the magnetic field, the vector of the direction of movement, cross section and the number of turns in the winding. Permanent magnets can be used to create such fields.

The aim is achieved by an electricity generator according to claim 1. Further preferred embodiments are depicted in the dependent claims.

An electricity generator according to the invention comprises a rotor and a stator, wherein one of the rotor and the stator comprises a plurality of magnetic elements, preferably permanent magnets, each magnetic element comprises a portion of a first and second polarity, and the other of the rotor and stator comprises a plurality of windings, wherein the set of magnetic elements are arranged circumferentially around the axis of rotation of the rotor, wherein the windings are arranged circumferentially around the axis of rotation of the rotor and are formed as continuous loops with at least one intersection and a ring on each side of the intersection, and the arrangement of the rings of the winding and the arrangement of the portions of the first or second polarity of the plurality of magnetic elements are disposed opposite of each other. Due to the plurality of rings of the winding and the arrangement of the magnetic elements opposite to the rings of the winding, the degree of efficiency is improved. The windings are preferably formed in an "8"-shape.

Preferably, a block of a magnetic material is placed between two adjacent windings. This block of magnetic material serves to keep the force of the magnetic elements on a similar level so as to ease the rotation of the rotor and, thus, improve the running characteristics. The block of magnetic material can comprise a borehole, preferably filled with a magnet. This further improves the rotation of the rotor.

Preferably, the magnetic elements (5, 6) are tilted with respect to a radial line from the axis of rotation, in particular in an angle between 1° and 3° degree, more preferably 2° degree. This parameter will not affect the power of the generator, but in the presence of an angled magnetic element, the amount of external mechanical energy required to rotate the rotor of the generator is significantly reduced. That is, in the absence of such an angled magnetic element, the demand for the amount of external mechanical energy increases (or the fuel consumption in the diesel generator increases).

The stator and the rotor are preferably formed by fixing the windings and the magnetic elements on discs, wherein the discs are arranged axially. More particularly, the generator further comprises a second arrangement of a plurality of magnetic elements and a second arrangement of a plurality of windings, wherein the second arrangements are stacked in an axial direction to the first arrangement, in particular that the windings are fixed on opposite sides of a disc and the magnetic elements are fixed on an additional disc, respectively, wherein the disc with the windings are disposed intermediate the discs with the magnetic elements. The double arrangement of windings and magnetic elements further improve the degree of efficiency by doubling the interacting parts within a very small space. The second arrangement of windings can have wires with a different diameter than the wires of the first arrangement of windings. In another embodiment, the windings are bent so as to oppose the rings of the winding loop to each other, accommodating the disc with the magnetic elements in between the rings. In yet another embodiment, the rotor and the stator are stacked in a radial direction.

Preferably, the generator further comprises diode bridges for receiving the voltage generated by all the windings, the diode bridges are interconnected in series. The diode bridges greatly enhance the power output, in particular for when alternate current is produced.

Each of the rings of the windings comprises a core and the cores are preferably connected to each other by a magnetic material, for example the same material as the core. This enables an improved generation of electricity.

Furthermore, the generator can comprise a levitation belt made of a plurality of magnetic elements fixed at the stator and rotor respectively, wherein the magnetic elements urge the stator and the rotor away from each other. This eases the rotation of the rotor by keeping the distance between the magnetic elements and the windings in an optimal distance. The plurality of magnetic elements can interact with the plurality of magnetic elements for the current generation to urge the stator and the rotor away from each other. This enables a properly working levitation belt but with the use of less different parts and space.

Preferably, the number of magnetic elements and the number of windings are equal. This is the optimal parameter in which the generator operates at maximum power.

Generally, an electric generator comprises permanent magnets and a winding in the form of coils wound around cores exposed to a magnetic field of permanent magnets. For example, at least one part is made of a material with a high magnetic permeability, to which permanent magnets are attached and they interact with the winding, at least one part is rotated, in this case the disks containing magnets are a rotor, and the permanent magnets in this part are located in a set of two belts, so that in each strip the permanent magnets are located one and the same a pole directed in one direction, forming a strip of identical poles, and in two strips there are two different magnetic poles and each coil in which an electromotive force is generated, is wound on two cores of material with high magnetic conductivity, forming a shape of "8" in which one ring of "8" is located opposite to the magnets of one belt - and accordingly to one pole of magnets - and the second ring of eight is located opposite to the second belt of magnets and, accordingly, opposite to the other magnetic pole.

To reduce the attraction of the rotating parts of the permanent magnet to the winding cores, closer to the center of the generator - permanent magnet belts are preferably installed near the axis of rotation, forming a special levitation belt - arranged so that the set of magnets of the levitation belt of one disk is in close proximity to the set of permanent magnets of another disk and they are face each other with the same pole of the same name - as a result of which the belts are repelled.

In a **first** more specific embodiment, the generator contains two outer parts in the form of disks with permanent magnets located around a circle with different radii, on which the poles of the permanent magnets have an annular shape, and the poles of the belts of the same disk are opposite to the poles of another disk with the same poles. Cores on which coils are wound, in which an electromotive force is generated, are mounted on a disk that is located between these outer disks with permanent magnets, and the cores are mounted perpendicular to its surface and are opposite to the same pole strips of the same belt of both disks with permanent magnets. In this embodiment, the middle disk does not rotate and acts as a stator, and the external disks connected to each other are the rotor.

One winding can be of the same cross section or two windings of different cross sections, one on one side of the disk and the another on its another side.

Preferably, the disks with sets of permanent magnets are mounted to rotate on the fixed axis of the generator by means of bearings and are connected to each other by connecting jumpers.

Preferably, the generator is equipped with diode bridges to which the outputs from each voltage receiving winding are connected, these diode bridges are connected in series and at the output there are two contacts with connected wires going through an opening in the fixed axis of the generator and brought out.

In order to reduce the attraction of the rotating parts of the permanent magnet to the winding cores, closer to the center of the generator - permanent magnet belts are installed near the axis of rotation, forming a special levitation belt - arranged so that the set of magnets of the levitation belt of one disk is in close proximity to the set of permanent magnets of another disk and they are facing each other with the same pole of the same name - as a result of which these belts are repelled, which makes it possible to obtain a levitating effect in such a design, which leads to a significant reduction in the external mechanical force required for the generator to work and, accordingly, to obtain maximum efficiency of the entire structure.

In a **second** more specific embodiment, the rotor is made in the form of a central disk on the axis, containing in its circle a belt of magnets that are installed in holes and made in the rotor unipolar on different sides of the central disk of the rotor, where on one side all the magnets have magnetization "N", and on the other " S "and a stator, consisting of two external disks interconnected by a protective casing, connecting strips fastened to each other, which together form a housing of a current generator, to which magnetically conductive metal cores are attached and are fastened by bolts to the core of the winding to two external disks of the generator housing, on which the core winding is inserted, which is made in the form of a bent "U"-shaped eight, each half of which is located on different sides of the rotor magnetic belt and is worn on cores that consist of four magnetically conductive metal cores, which are connected by jumpers in the form of a connecting strip of magnetically conductive material and are fixed by fixing screws of the winding core, where one circle of the shape eight always passes by the "N" magnet pole, and the second winding ring always passes by the "S" magnet pole; moreover, the winding wire has an external current output contact on the generator's protective casing to which all winding coils are connected in series via diode bridges.

To reduce the attraction of the rotating parts of the permanent magnet to the winding cores, closer to the center of the generator - permanent magnet belts are installed near the axis of rotation, forming a special levitation belt - arranged so that the set of magnets of the levitation belt of one disk is in close proximity to the set of permanent magnets of another disk and they are facing each other with the same pole of the same name - as a result of which these belts are repelled, which makes it possible to obtain a levitating effect in such a design which leads to a significant decrease in the external mechanical force necessary for the generator to work and, accordingly, to obtain maximum efficiency of the entire structure.

Due to the implementation of the winding in the form of the "8"-shape bent into letter "U", which is located so that each subsequent part of the winding is located on the opposite sides of the central rotor disk and with a magnetic belt, it is possible to achieve the effective use of the minimum number of magnets, since one and the same while the magnet being in the rotor part with one side of its field affects one part of the winding, and the second side of its opposite field affects the second part of the winding, and therefore the winding bent in the shape of "U" gives the ability of the same magnet to act immediately with two opposite poles on the same winding, due to which, the magnetic field intersects, reducing the number of magnets used to close the circuit in order to obtain EMF and, accordingly, unproductive losses in the conductor in the form of resistance, as a result increasing the efficiency of the entire structure.

In a **third** more specific embodiment, the generator has an axis on which the stator and rotor, rotation bearings, a winding and magnets are fixed, which according to the invention has an axis on which the stator is fixed using connecting crosses made of low magnetic conductivity material, to which a core is fastened statically with fastening pins, consisting of two pockets of cores of the stator part for the winding, which are made of high magnetic conductivity material, inserted between them a connecting central ring made of material with high magnetic conductivity and two external connecting rings made of low magnetic conductivity material for fastening the winding and arranging magnetic inserts to be directed by the same magnetic field to the nearest part of the rotor magnetic belt, a winding put on the stator consisting of windings wound in the form of a figure "8" laid by its two rings on the stator cores interacts with an external rotor, which has two magnetic belts of permanent magnets where in each belt there are magnets of the same field name, the "N" belt and the "S" belt are located in two parallel planes in a circle around the stator, where the first magnet belt has all the permanent magnets facing the winding with a magnetized pole "N", and the second magnetic belt has all the permanent magnets facing the winding with a magnetized pole "S", the magnetic belts have the same number of permanent magnets, where each permanent magnet of one magnetic belt is located opposite to a permanent magnet of another belt without displacement, where permanent magnets in these magnetic belts are interconnected in pairs using magnetic belts' cores, the cores are made of high magnetic conductivity material, the number of such cores is equal to the number of windings, where the magnetic belts' cores are placed at equidistant distances from each other and are fastened with fastening bolts to the rotor housing made of low magnetic conductivity material, where the rotor housing due to protective casings made of low magnetic conductivity has a nest for bearings and is connected to the axis of the generator, which has an internal hole for outputting the winding part to the outside, and contains two external stator disks made of low magnetic conductivity material, containing in their plane perpendicularly placed single-pole magnetic inserts that are fixed in the dedicated mounting holes, with the same magnetic pole facing in the direction of the magnet of the rotor part, which intersects them during rotation, and all the permanent magnets of the rotor part in turn of one belt and other, at the same time placed in front of levitating inserts of the stator part.

The generator according to the present invention can be used in all areas where any external sources of mechanical energy can be connected to it, such as wind generators, hydraulic turbines, automobiles, heavy vehicles, hybrid aircraft etc. Depending on the configuration of the winding connection, the generator can generate a constant or an alternating current.

### Brief description of the Figures

Fig. 1 illustrates a General appearance of the generator;
Figures 2 - 3 show the location of the disks of the generator and their design;
Figures 4 and 5 show the second embodiment of the generator;
Figures 6 and 7 show the third embodiment of the generator;
Figure 8 shows a fourth embodiment in which the generator can be used as a motor; and
Figure 9 shows a winding that is used in all embodiments of the generator.

### Description of the preferred Embodiments of the Invention

In the application, the directions "axial", "radial" and "circumferential" relate to the axis of rotation of the respective rotor. Furthermore, although in the specific embodiments one and two described below the rotor comprise the magnetic elements and the stator comprises the windings, it is possible that the rotor comprises the windings and the stator comprises the magnetic elements as shown for instance in embodiment three.

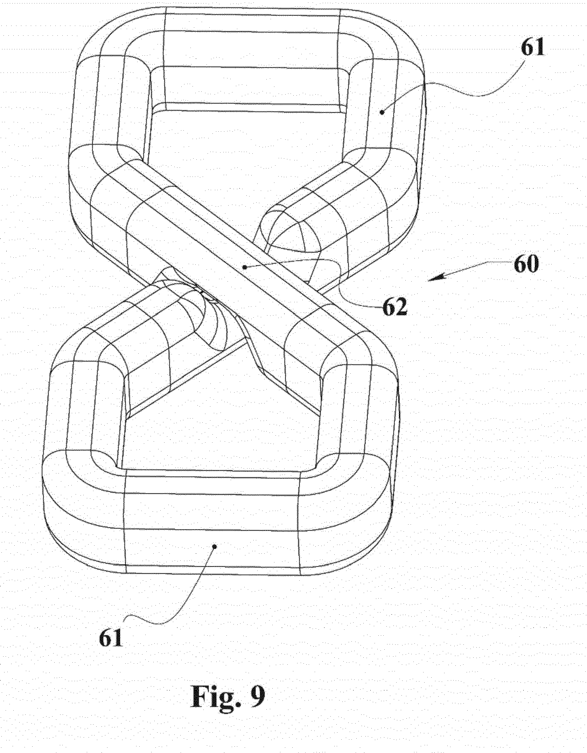

An electrical current generator contains magnetic elements, in particular permanent magnets, and the winding of coils wrapped around cores. A winding according to the invention is shown in Figure 9. The winding 60 can be built by providing a continuous loop of a wire that is twisted on or more times to create an intersection 62 with a ring 61 on each side of the intersection. It is possible to have more than one intersection (odd numbers) and more than one ring (even numbers), for example three intersections and four rings. In Figure 9, one ring 61 is preferably in an approximate rectangular shape, but there are several possible shapes as long as the movement of the windings 60 in the magnetic field will generate a current in the winding 60. The winding or coil itself does preferably have an approximate "8"-shaped loop.

The generator in the **first** embodiment consists of two main parts - a stator and a rotor, where the axis is statically fixed to the stator, and the rotor is two external disks with permanent magnets connected to each other. The rotor is driven by mechanical energy extracted from an external source, such as wind from an installation. The permanent magnets are located in two sets, so that in each set the permanent magnets are located with the same pole in the same direction, forming one strip of " S " - poles and one strip of " N " - identical poles, therefore the poles of both sets in this part are connected to each other by a magnetically conductive material of which the disk on which they are located consists. Each winding is wound on two cores, forming a figure eight, one of which is placed opposite to one strip of the same pole S, and the other opposite the other strip of the second pole N.

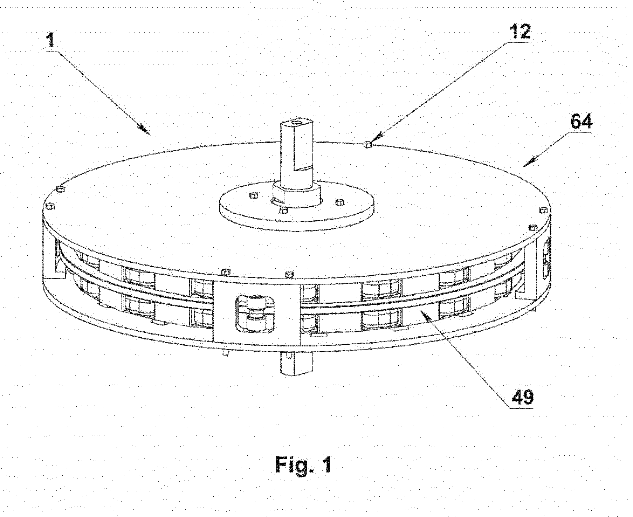

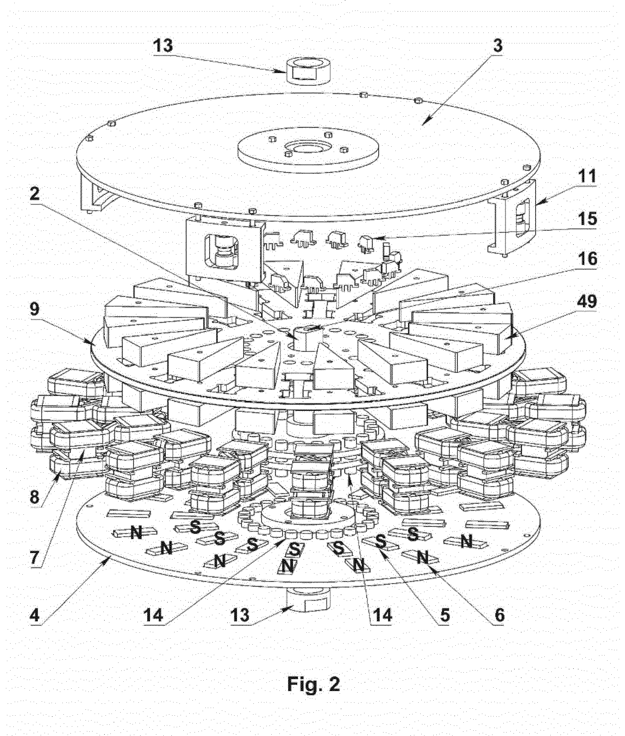

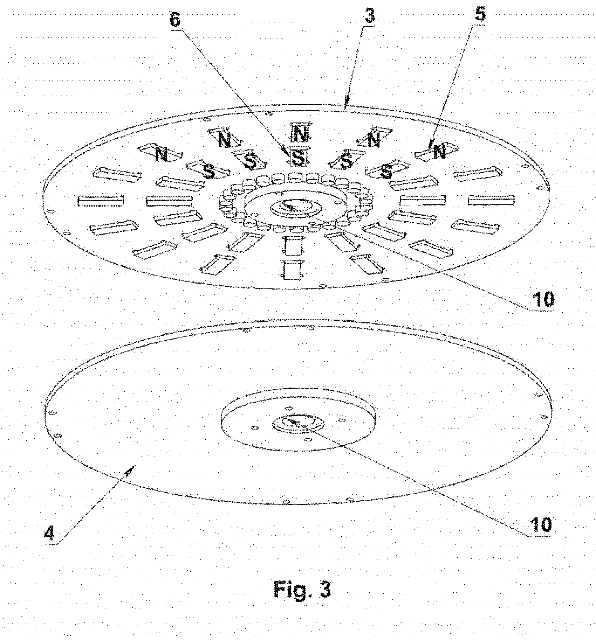

In the embodiment where the generator 1 contains two parts with permanent magnets (Figs. 1-3), the parts have the form of disks 3, 4 spaced by a certain distance, which are attached to the axis 2. The belts of permanent magnets of the "N" and "S" 5, 6 have an annular shape and are concentric with respect to each other and to the axis of the disk. The ring of the same pole "S" of one disk 3 is located opposite to the ring of the same pole " S " of the other disk 4, and accordingly, the ring of the same pole " N " of one disk 3 is located opposite to the ring of the same pole " N " of the other disk 4. The core winding 8 in the form of "8", in which electromotive force is generated, is wound on the cores 7, which are made of a material with high magnetic permeability and installed in the disk 9, which is disposed between mentioned discs 3, 4 with permanent magnets 5, 6. The cores 7 are installed in the disk 9 perpendicularly to its surface and opposite to the magnetic poles of the same name with the same fields of both permanent disks 3, 4 with permanent magnets 5, 6, as a result these cores are intensely magnetized.

In one version, on both sides of a core 7, the core winding 8 is wound with a wire of the same cross section, and in another embodiment, it can be of different cross sections, one on one side of the disk 9 and different on another. For example, on one side of the disk 9, the wire from which the winding 8 is wound has a cross section of 1 mm, while on the other side of the disk 9 on the same core 7 there is a coil with a wire, the cross section of which is 0.5 mm.

Disks 3, 4with sets of permanent magnets 5, 6 are mounted to rotate on the fixed axis 2of the generator 1by means of bearings 10 and are connected to each other by connecting jumpers 11 secured by bolts 12, forming a generator housing, fixed on the axis with clamping pressure shims 13.

To reduce the resistance of attraction between the magnets 5, 6 and the core 7, the generator is equipped with permanent magnets 14 that perform the function of a levitation belt and are directed by the same poles to each other and located on the central disk of the stator and on the two outer disks of the rotor. These magnets significantly reduce the braking forces between the rotating elements, so the generator can be operated with lower mechanical energy consumption from an external source

To receive electric current, the generator is equipped with diode bridges 15 near each of the windings 8 for receiving voltage from all winding coils, and these diode bridges are connected in series and at the output form the "+" and "-" contacts in the wires, going through a hole 16 in the fixed axis of the generator out to the target consumption unit.

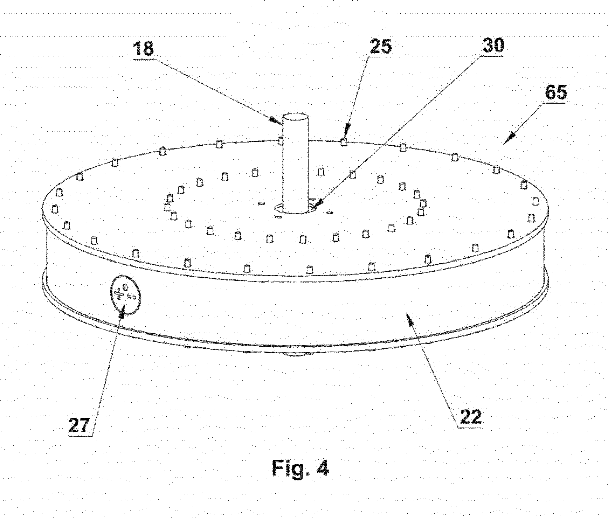

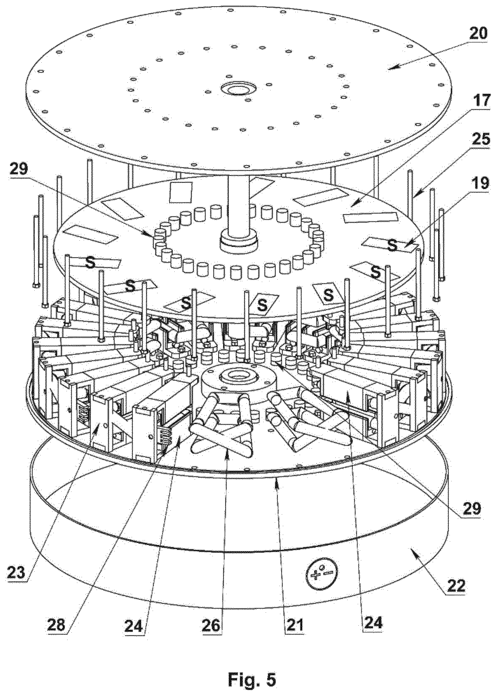

In the **second** embodiment (Fig. 4-5), the rotor is made in the form of a middle disk 17 on the axis 18, containing in its circle a belt of magnets 19, which are installed in holes made in the rotor unipolarly on opposite sides of the central disk of the rotor , where on one hand all the magnets have a magnetization "N", and on the other "S" and a stator, consisting of two external stator disks of the generator 20, 21, which are mounted on the axis 18 by means of bearings 30 and are interconnected by a protective casing 22, fastened to each other with connecting strips 23, which together form the housing of the generator to which magnetically conductive metal cores are attached 24 and fastened with fastening bolts 25, on which the core winding 26 is put on, which is made in the shape of a figure eight "8" bent "U-shaped", whose halves lay on different sides of the rotor magnetic belt 19 and are dressed on cores 24, which are connected by connecting strips 23 made of magnetically conductive material and are secured by fastening bolts 25, where one ring of the eight-shaped winding always passes by the " N " pole magnet, and the second ring of the winding simultaneously passes by the opposite pole of the "S" magnets, in addition, the winding wire is connected to the external hole 27 of the output of the current wires on the protective casing of the generator to which all winding coils are connected in series via diode bridges 28.

To reduce the resistance of attraction between the magnets 19 and the cores 24, the generator is equipped with permanent magnets 29 that perform the function of a levitation belt directed by the same poles to each other and located on the central disk of the rotor and on the two outer disks of the stator. These magnets significantly reduce the braking forces between the rotating elements, so the generator can be operated with lower energy consumption from an external source.

Thanks to the implementation of the winding 26 in the form of a "figure eight" bent in the shape of "U", which is located so that each subsequent part of the winding is located on an opposite side of the central rotor disk with a magnetic belt, it is possible to achieve the effective use of a minimum number of magnets, since the same magnet 19 being in the rotor part affects one part of the winding with one side of its field, and the second part of the winding with the opposite side of its field, and therefore the winding bent to the shape "U" makes it possible for one and the same magnet to influence the same winding by the two of its opposing poles, whereby the magnetic field simultaneously intersects different fields from one magnet with two parts of the coil, reducing the number of magnets used to close the circuit and produce EMF and, accordingly, it reduces unproductive losses in the conductor in the form of resistance and as a result increasing the efficiency of the entire structure.

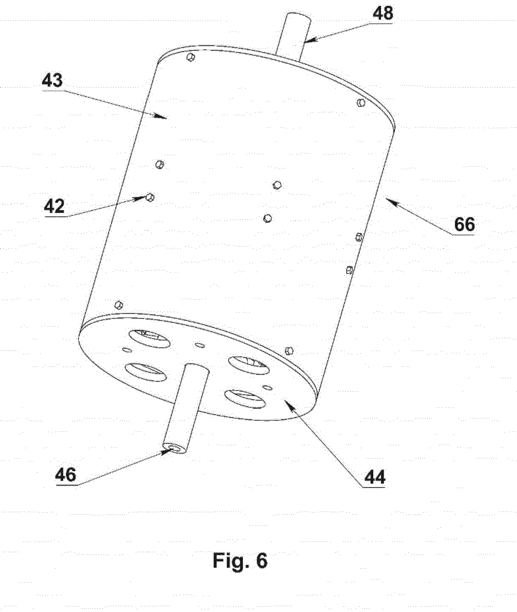

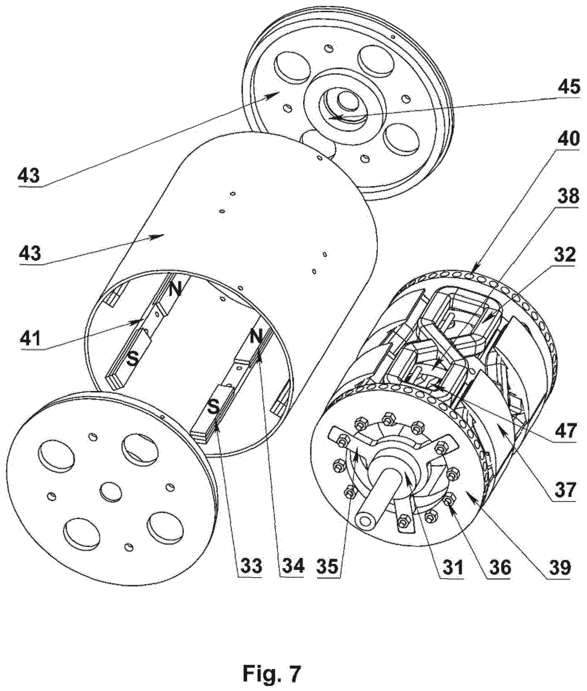

In the **third** embodiment (Fig. 6 - 7), the generator has an axis 48, on which the stator and rotor, rotation bearings 31, core winding 32 and permanent magnets 33, 34 are fixed, the stator is fixed on the axis using connecting crosspieces 35 made of low magnetic conductivity material, to which two packages of cores 37 of the stator part for the winding 32 are fixed using fastening pins 36, which are made of a material with high magnetic conductivity, a connecting Central ring 38 inserted between them made of a material with high magnetic conductivity and two connecting side rings 39 made of a material with low magnetic conductivity for mounting of the winding and placement of the magnetic inserts 40, directed by the same name magnetic field to the nearest part of the magnetic belt of the rotor, the winding 32 is put on the stator and is made in the form of a figure "8" laid by its two rings on the stator cores, which interacts with the external rotor, which has two magnetic belts of permanent magnets 33, 34, which individually form a magnetic belt of the same field, one "N" belt and the other "S", located in two parallel planes in a circle around the stator, where one magnetic belt that has all the permanent magnets facing the winding pole with a magnetization of "N" and the second magnetic belt has all the permanent magnets facing the winding pole with a magnetization of "S", where the magnetic belts have the same number of permanent magnets, where each permanent magnet of one magnetic belt is located opposite to the permanent magnet of the other belt without displacement, where the permanent magnets in these magnetic belts are interconnected in pairs using the cores of the magnetic belts 41 made of high magnetic conductivity material, where the cores of the magnetic belts are attached using mounting bolts 42 to the rotor housing 43 made of low magnetic conductivity material, where the rotor housing using protective casings 44 made of low magnetic conductivity material has a slots for the bearings 45 and is connected to the axis of the generator 48, which has an internal hole 46 for outputting the wires of the winding part to the outside, where each winding 32 is output to the diode bridge 47, and all diode bridges are interconnected in series, and (each winding) contains two lateral connecting rings 39 of the stator made of low magnetic conductivity material containing permanent magnets placed perpendicularly in its plane 40, directed by the same magnetic pole towards the magnet of the rotor part, which intersects them during rotation, and all the permanent magnets of the rotor part in turn of one belt and the other, are simultaneously opposing the levitating inserts of the stator part.

In the **fourth** embodiment, this design can be used as an electric motor. The difference of the proposed electric motor compared to traditional ones is that the rotor - in this case the axis of the electric motor - should consist of two independent semi-axes connected by a bearing with the possibility of multidirectional rotation. Thus, when applying alternating current to the winding in the form of "eights", both parts of the axis will rotate in the diametrically opposite direction. Such a device can be effective in use, for example, in aerial propellers of vertical take-off.

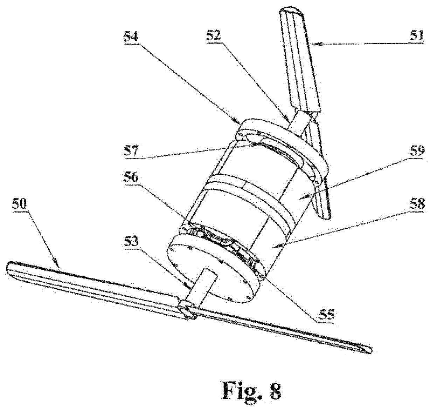

In the **fourth** embodiment (Fig. 8), this design can be used as an electric motor. The difference of the proposed electric motor compared to traditional ones is that the rotor - in this case the axis of the electric motor fastens to the case (54) and should consist of two independent semi-axes (52, 53) connected by a bearing with the possibility of multidirectional rotation. Each half-axis has a unipolar set of magnets (55) -reversed by the same field to that part of the winding (56, 57) with which it interacts. The winding is installed in the cores (58, 59) divided into two halves. Thus, when applying alternating current to the winding in the form of "eights", both parts of the axis will rotate in the diametrically opposite direction, - screws for aircraft can be attached to them (50, 51).

### List of reference numbers

1. - current generator
2. - shaft
3. - disk with permanent magnets
4. - disk with permanent magnets
5. - permanent magnet
6. - permanent magnet
7. - core of winding
8. - winding
9. - stator disk
10. - bearing
11. - connecting strip
12. - mounting bolt
13. - pressure shim
14. - permanent magnets of the levitation belt
15. - diode bridge
16. - wire outlet hole
17. - medium disk
18. - shaft
19. - permanent magnets
20. - external stator disk of the generator
21. - external stator disk of the generator
22. - protective cover
23. - connecting strip
24. - core of winding
25. - mounting bolt
26. - winding
27. - wire outlet hole
28. - diode bridge
29. - permanent magnet of the levitation belt
30. - bearing
31. - bearing
32. - winding
33. - permanent magnet
34. - permanent magnet
35. - connecting cross
36. - connecting stud
37. - core of winding
38. - central connecting ring
39. - side connecting ring
40. - permanent magnet of the levitation belt
41. - core of the magnetic belt
42. - mounting bolt
43. - rotor housing
44. - protective cover
45. - slot for bearing
46. - wire outlet hole
47. - diode bridge
48. - shaft
49. - block
50. - propeller 1
51. - propeller 1
52. - semi-axis of independent rotation 1
53. - semi-axis of independent rotation 2
54. - motor housing
55. - a set of unipolar mounted magnets on the semi-axis
56. - semicircle in the shape of a figure eight over the pole of the same name magnets «N»
57. - semicircle in the shape of a figure eight over the pole of the same name magnets «S»
58. - cores over the pole of the same name magnets «N»
59. - cores over the pole of the same name magnets «S»
60. - winding
61. - ring of the winding
62. - intersection of the winding
64. - rotor
65. - stator
66. - stator

## Claims

1. An electricity generator (1) comprising
a rotor (17, 64,) and a stator (9, 65, 66), wherein one of the rotor (17, 64) and the stator (9) comprises a plurality of magnetic elements (5, 6, 19, 33, 34), each magnetic element comprises a portion of a first polarity (N) and a second polarity (S), and the other of the rotor (17, 64) and the stator (9) comprises a plurality of windings (8, 26, 32, 60),
wherein the plurality of magnetic elements (5, 6) are arranged circumferentially around the axis of rotation of the rotor,
**characterized in that**
the plurality of windings (8, 26, 32, 60) are arranged circumferentially around the axis of rotation of the rotor (17, 64) and are formed as continuous loops with at least one intersection (62) and a ring (61) on each side of the intersection (62) wound around a core (7), and
the arrangement of the rings (61) of the windings (8) and the arrangement of the portions of the first polarity and the portions of the second polarity of the plurality of magnetic elements (5, 6) are disposed opposite of each other.

2. Generator (1) according to claim 1, wherein a block of a magnetic material (49) is placed between two adjacent windings (8, 26, 32, 60).

3. Generator (1) according to claim 2, wherein the block of magnetic material (49) comprises a hole.

4. Generator (1) according to any preceding claim, wherein the magnetic elements (5, 6) are tilted with respect to a radial line perpendicular from the axis of rotation.

5. Generator (1) according to any preceding claim, wherein the stator and rotor are formed by fixing the windings (8, 26, 60) and the magnetic elements on discs, wherein the discs are arranged axially.

6. Generator (1) according to claim 5, further comprising a second arrangement of a plurality of magnetic elements (5, 6) and a second arrangement of a plurality of windings (8, 26, 60), wherein the second arrangements are stacked in an axial direction to the first arrangement.

7. Generator (1) according to claim 6, wherein the second arrangement of windings (8, 60) have wires with a different diameter than the wires of the first arrangement of windings (8, 60).

8. Generator (1) according to claim 5, wherein the windings (26, 60) are bent so as to oppose the rings (61) of the winding loop to each other, accommodating the disc with the magnetic elements in between the rings (61).

9. Generator (1) according to any preceding claim, wherein the rotor (43) and the stator are stacked in a radial direction.

10. Generator (1) according to any preceding claim, further comprising diode bridges (15, 28, 47) for receiving the voltage generated by all the windings (8, 26, 32, 60), the diode bridges (15, 28, 47) are interconnected in series.

11. Generator (1) according to any preceding claim, wherein the cores of each of the rings (61) of the windings (8, 26, 32, 60) are connected to each other by a magnetic material.

12. Generator (1) according to any preceding claim, further comprising a levitation belt made of a plurality of magnetic elements (14, 29) fixed at the stator and/or rotor respectively, wherein the magnetic elements (14, 29) urge the stator and the rotor away from each other.

13. Generator (1) according to claim 12, wherein the plurality of magnetic elements (29) interact with the plurality of magnetic elements for the current generation to urge the stator and the rotor away from each other.

14. Generator (1) according to any preceding claim, wherein the number of magnetic elements and the number of windings are equal.
